# EUROPÄISCHE PATENTSCHRIFT

(11) **EP 2 864 021 B1**
(45) Veröffentlichungstag und Bekanntmachung des Hinweises auf die Patenterteilung: **07.06.2023**
(21) Anmeldenummer: 13715608.9
(22) Anmeldetag: 05.04.2013
(51) Int. Cl.: B01D 45/12

(54) **VORRICHTUNG ZUR KONDITIONIERUNG VON GASEN**
APPARATUS FOR CONDITIONING OF GASES
DISPOSITIF POUR LE CONDITIONNEMENT DE GAZ

(30) Priorität: 26.06.2012 DE 102012012727
(43) Veröffentlichungstag der Anmeldung: 29.04.2015
(73) Patentinhaber: Hydac Process Technology GmbH, 66538 Neunkirchen (DE)
(72) Erfinder: DEUTSCHMEYER, Manfred, 66706 Perl (DE); SCHLICHTER, Bernhard, 66123 Saarbrücken (DE); ZELLER, Sergej, 67734 Katzweiler (DE)
(74) Vertreter: Bartels und Partner, Patentanwälte
(86) Internationale Anmeldenummer: PCT/EP2013/001019
(87) Internationale Veröffentlichungsnummer: WO 2014/000837

(56) Entgegenhaltungen:
- EP-A1- 1 275 432
- EP-A2- 0 628 345
- WO-A2-2004/067148
- DE-A1-102009 025 395
- US-A- 5 271 245
- US-A- 5 961 701
- US-A1- 2005 039 599

## Beschreibung

Die Erfindung betrifft ein Baukastensystem mit einer Vorrichtung zur Konditionierung von Gasen, insbesondere von Sperrgas, mit den Merkmalen im Oberbegriff von Anspruch 1.

Vorrichtungen dieser Art sind Stand der Technik. Ein Anwendungsgebiet derartiger Vorrichtungen ist die Konditionierung von Sperrgas. Bekanntermaßen besteht bei der Handhabung korrosiver Prozessgase, etwa beim Pumpen mittels Turboverdichtern, die Gefahr, dass empfindliche Teile an Pumpe, Lagerstellen und/oder Dichtsystemen aufgrund der im verbundenen Prozessgas vorhandenen Feststoffpartikel nebst Feuchte angegriffen werden. Um dieser Gefahr zu begegnen, müssen empfindliche Teile, z. B. die Lagerstellen, durch Sperrgas in Form eines kontinuierlichen Inertgasstromes geschützt werden, wobei das Inertgas über die zu schützenden Stellen des Systems strömt. Bei einem entsprechenden Inertgas kann es sich um trockenen Stickstoff handeln. Im Betrieb soll der Druck des Sperrgases höher (beispielsweise etwa 3 bar) als der Prozessgasdruck sein, so dass kein Prozessgas in die Atmosphäre gelangen kann. In Betracht des meist hohen Druckes des Prozessgases, häufig mehr als 100 bar, muss die Gas-Konditioniervorrichtung auf ein hohes Druckniveau ausgelegt sein.

Die DE 10 2009 025 395 A1 beschreibt eine Vorrichtung zur Konditionierung von Gasen, insbesondere von Sperrgas, mit einer Separatoreinheit, insbesondere zum Abscheiden von Flüssigkeiten und/oder Partikeln aus dem die Vorrichtung durchströmenden Gas, und mit einem Sammelbehälter für abgeschiedene Substanzen, wobei die Separatoreinheit einen Zyklonabscheider mit einem Zyklongehäuse aufweist, das am unteren Ende eines Einlaufzylinders einen Beschleunigungskegel aufweist, der sich am Übergang zwischen Gehäuse und der Oberseite des Sammelbehälters in dessen Eingangsöffnung und damit in dessen Innenraum erstreckt, wobei der Beschleunigungskegel in einem Einsatzkörper ausgebildet ist.

Weitere Vorrichtungen zur Konditionierung von Gasen gehen aus der WO 2004/067148 A2, der EP 1 275 432 A1, der US 5 271 245, der US 2005/ 0039599 A1, der EP 0 628 345 A2 und der US 5 961 701 A hervor.

Ausgehend von diesem Stand der Technik stellt sich die Erfindung die Aufgabe, ein Baukastensystem mit einer Vorrichtung zur Konditionierung von Gasen zur Verfügung zu stellen, die wartungsarm und somit kostengünstig betreibbar ist und sich durch eine effiziente Abscheidewirkung auszeichnet.

Erfindungsgemäß ist diese Aufgabe durch ein Baukastensystem gelöst, das die Merkmale des Patentanspruches 1 in seiner Gesamtheit aufweist.

Demgemäß besteht eine wesentliche Besonderheit der Erfindung darin, dass mehrere unterschiedliche Einsatzkörper vorgesehen sind, die bei Bedarf gewechselt werden, wenn eine andere Dimensionierung und/oder Formgebung des Beschleunigungskegels zweckmäßig ist.

Es ist ferner vorgesehen, dass die Separatoreinheit einen Zyklonabscheider aufweist. Durch Benutzung eines Zyklonabscheiders ist ein weitgehend wartungsfreier Betrieb der Vorrichtung bei hoher Effizienz der Abscheidung realisierbar, so dass die Vorrichtung kostengünstig und wirtschaftlich betreibbar ist.

Die Separatoreinheit kann als eigenständige, vom Gas durchströmbare Baueinheit auswechselbar am Sammelbehälter angeordnet sein. Für eine Anpassung an jeweilige Prozessbedingungen, wie Art des Gases, Art der Belastungen durch Feuchtigkeit und Festpartikel, durch Durchströmrate und dergleichen, muss lediglich die Separatoreinheit getauscht werden, während der Sammelbehälter mit den ihm üblicherweise zugehörigen Zusatzeinrichtungen verbleiben kann. In Anbetracht des hohen Druckniveaus von beispielsweise mehr als 100 bar, und der demgemäß aufwändigen, druckfesten Ausgestaltung, ist die Möglichkeit, bei Änderung der Betriebsbedingungen den gleichen Sammelbehälter mit zugehörigen Einrichtungen, wie Armaturen und dergleichen zu benutzen, von großer wirtschaftlicher Bedeutung.

In vorteilhafter Weise kann die Separatoreinheit an der Oberseite des Sammelbehälters angebracht und mit diesem über eine Eingangsöffnung des Sammelbehälters in Verbindung sein.

Hinsichtlich des Zyklonabscheiders kann die Anordnung mit Vorteil so getroffen sein, dass an dem Zyklongehäuse eine Zuströmöffnung derart angeordnet ist, dass der Gasstrom im Zyklongehäuse eine Drallströmung um dessen vertikale Hochachse ausbildet, wobei am Zyklongehäuse eine Ausströmeinheit mit einem koaxial zur Hochachse nach oben verlaufenden Ausströmkanal vorgesehen ist. Dieser kann geradlinig zu einem an der Oberseite des Zyklongehäuses befindlichen Ausströmanschluss verlaufen.

Für einen seitlich am Zyklongehäuse befindlichen Ausströmanschluss kann die Ausströmeinheit alternativ derart gestaltet sein, dass der Ausströmkanal einen sich an seinen vertikalen Anfangsabschnitt anschließenden und horizontal zum seitlich gelegenen Anströmanschluss verlaufenden Abschnitt aufweist.

In der Art eines Baukastensystems lassen sich so mit einem jeweils gleichen Sammelbehälter an unterschiedliche Prozessbedingungen angepasste Vorrichtungen verwirklichen, indem ein entsprechender Austausch des Zyklongehäuses am Sammelbehälter durchgeführt wird und/oder dass bei Bedarf das Zyklongehäuse mit einer Ausströmeinheit ausgerüstet wird, die für einen an der Oberseite befindlichen Ausströmanschluss oder für einen seitlich gelegenen Ausströmanschluss ausgelegt ist.

Bei besonders vorteilhaften Ausführungsbeispielen weist die Vorrichtung im Strömungsweg des der Separatoreinheit zuströmenden Gases einen Gaskühler auf. Beim Betrieb der Vorrichtung eröffnet sich dadurch die Möglichkeit, das betreffende Gas auf eine Temperatur unter dem Taupunkt, beispielsweise auf eine Temperatur von 10 K unter dem Taupunkt, abzukühlen, um aus dampfförmiger Phase Kondensat für die Abscheidung mittels des Zyk-Ions zu bilden.

Vorzugsweise ist am Grund des Sammelbehälters eine steuerbare Auslasseinrichtung für angesammeltes Fluid vorgesehen. Die Anordnung kann hierbei so getroffen sein, dass die Auslasseinrichtung manuell steuerbar ist, beispielsweise mittels eines Nadelventiles oder Kugelhahnes, der am betreffenden Auslassanschluss vorgesehen ist.

Bei vorteilhaften Ausführungsbeispielen kann dem Sammelbehälter eine die Höhe des Füllstandes angesammelten Fluids erkennende Sensoreinrichtung zugeordnet sein. Bei derartigen Ausführungsbeispielen bietet sich die Möglichkeit, eine in Abhängigkeit von einem Signal der Sensoreinrichtung steuerbare Auslasseinrichtung vorzusehen, so dass die Anlage für einen selbsttätigen Betrieb über längere Betriebszeiträume auslegbar ist.

Anstelle einer manuell steuerbaren Auslasseinrichtung oder einer durch das Signal der Sensoreinrichtung steuerbaren Auslasseinrichtung kann für einen selbsttätigen Betrieb auch eine Auslasseinrichtung vorgesehen sein, die durch einen im Sammelbehälter befindlichen Schwimmer steuerbar ist.

Nachstehend ist die Erfindung anhand von in der Zeichnung dargestellten Ausführungsbeispielen im Einzelnen erläutert. Es zeigen:
- Fig. 1: eine perspektivische Schrägansicht eines Ausführungsbeispieles der erfindungsgemäßen Vorrichtung;
- Fig. 2: einen gegenüber einer praktischen Ausführungsform etwa um den Faktor acht verkleinert gezeichneten Längsschnitt des Sammelbehälters mit zugeordneten Aggregaten des Ausführungsbeispieles von Fig. 1;
- Fig. 3: einen der Fig. 2 ähnlichen Längsschnitt eines abgewandelten Ausführungsbeispieles; und
- Fig. 4: einen abgebrochenen Längsschnitt lediglich des bodenseitigen Bereiches eines weiteren abgewandelten Ausführungsbeispieles der erfindungsgemäßen Vorrichtung.

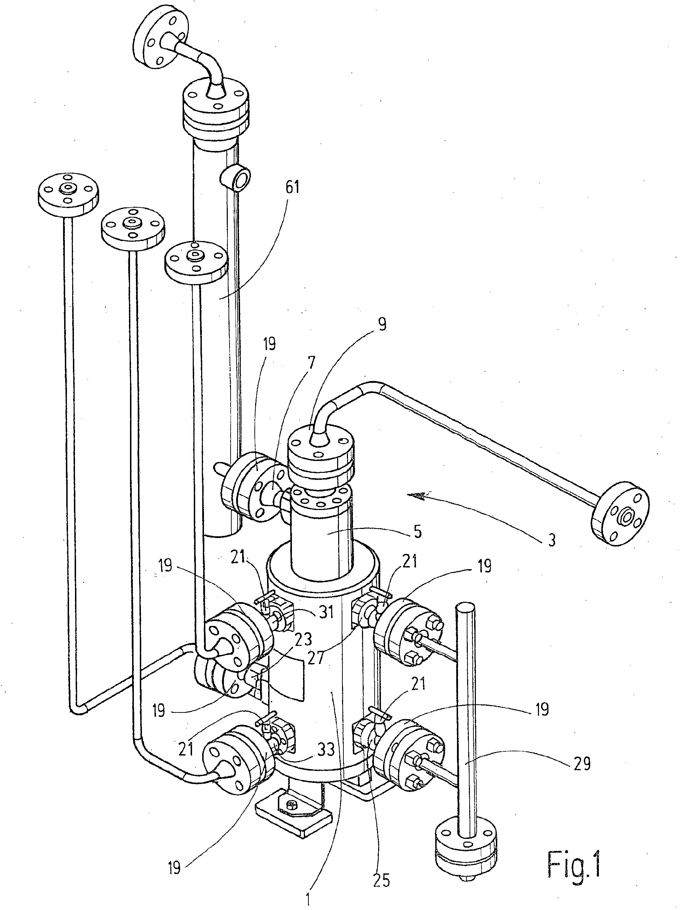

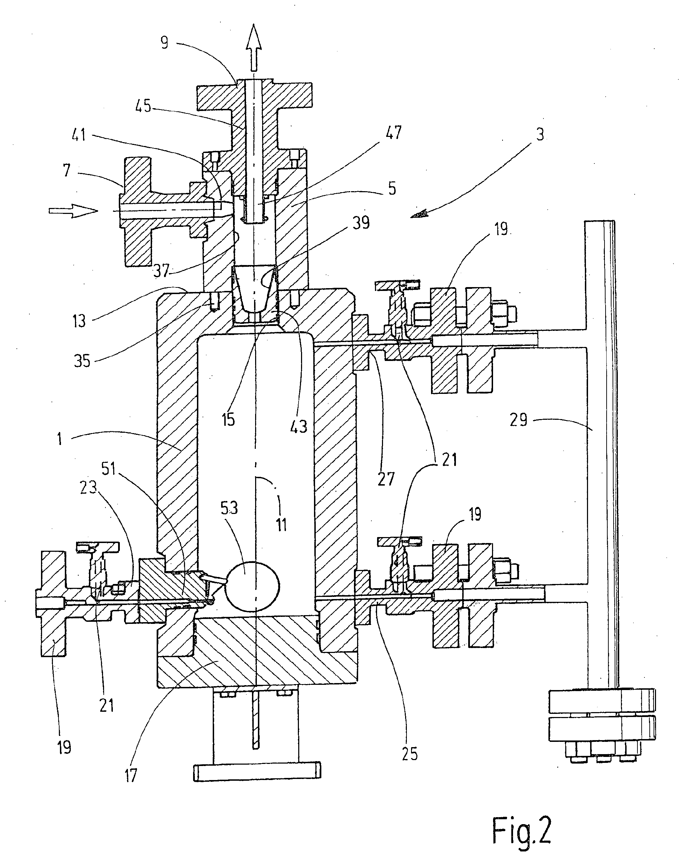

In Fig. 1 sind ein Sammelbehälter mit 1 und ein an dessen Oberseite abnehmbar angebrachter Zyklonabscheider mit 3 bezeichnet. Am Zyklongehäuse 5, das in Fig. 2 in näheren Einzelheiten gezeigt ist, befinden sich ein Zuströmanschluss 7 für den Eintritt des zu konditionierenden Gases sowie ein Ausströmanschluss 9. Der Sammelbehälter 1 hat die Form eines Hohlzylinders mit vertikaler Hochachse 11, der an seiner in der Zeichnung obenliegenden Oberseite 13 bis auf eine Eingangsöffnung 15 geschlossen ist. Das untere Ende ist durch ein Bodenstück 17 dicht abgeschlossen. Sammelbehälter 1 mit Bodenstück 17 weisen eine entsprechend große Wandstärke 1 auf, um einen Druckbehälter für hohes Druckniveau von mehr als 100 bar zu bilden.

Wie am deutlichsten aus Fig. 1 entnehmbar ist, befinden sich am Sammelbehälter 1 mehrere, jeweils mit einem Anschlussflansch 19 und einem Nadelventil 21 versehene Anschlüsse, von denen in Fig. 2 im Bereich des Bodenstückes 17 ein Auslassanschluss 23 sowie ein Sensoranschluss 25 sichtbar sind. Vertikal oberhalb des bodenseitigen Sensoranschlusses 25 befindet sich ein zweiter Sensoranschluss 27. Beide Sensoranschlüsse 25, 27 sind mit einer Sensoreinrichtung 29, die mit dem Innenraum des Sammelbehälters 1 eine Art kommunizierende Röhre bildet, in Verbindung. Die Sensoreinrichtung 21 weist zur Erkennung der Füllstandshöhe im Sammelbehälter 1 eine Einrichtung an sich bekannter Art für eine berührungslose Positionsanzeige eines im Sensorrohr befindlichen Elementes auf, beispielsweise eines Schwimmers mit permanentmagnetischen oder ferromagnetischen Bestandteilen.

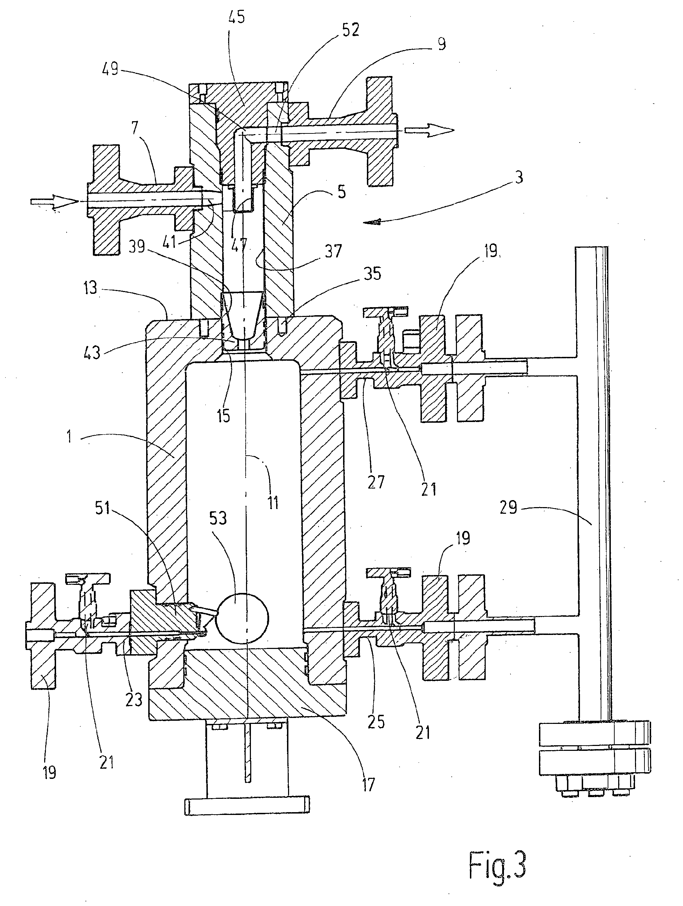

Außer den in Fig. 2 und 3 sichtbaren Anschlüssen sind am Sammelbehälter 1, wie Fig. 1 zeigt, auf Höhe des oberen Sensoranschlusses 27 ein Belüftungsanschluss 31 sowie ein bodenseitig angeordneter zweiter Auslassanschluss 33 vorgesehen. Von beiden Auslassanschlüssen 23 und 33 ist der Auslassanschluss 23 für einen selbsttätig gesteuerten Auslass von im Sammelbehälter 1 angesammelten Substanzen vorgesehen, während der zweite Auslassanschluss 33 für ein manuell gesteuertes Ablassen mittels Betätigung des zugehörigen Nadelventiles 21 vorgesehen ist.

Wie die Fig. 2 und 3 zeigen, ist bei den in diesen Fig. gezeigten, beiden Ausführungsbeispielen der Zyklonabscheider 3 mit seinem Zyklongehäuse 5 an der Oberseite 13 des Sammelbehälters 1 mittels Verschraubung 35 abnehmbar angebracht. Je nach den Bedingungen sind daher am Sammelbehälter 1 Abscheider gewünschter Zyklonengrößen und/oder Bauweisen anbringbar. In der bei Zyklonabscheidern 3 üblichen Weise weist das Zyklongehäuse 5 am unteren Ende des Einlaufzylinders 37 einen Beschleunigungskegel 39 auf, der sich am Übergang zwischen Gehäuse 5 und der Oberseite 13 des Sammelbehälters 1 in dessen Eingangsöffnung 15 und damit in dessen Innenraum erstreckt. Durch die Verjüngung des Kegels 39 wird die Drehgeschwindigkeit der Drallströmung, die durch den Gaszustrom über die Zuströmöffnung 41 des Zuströmanschlusses 7 im Einlaufzylinder 37 erzeugt wird, derart beschleunigt, dass nicht gasförmige Substanzen, wie Flüssigkeit und/oder Partikel, an die Wand des Kegels 39 geschleudert und soweit abgebremst werden, dass sie sich aus der Strömung lösen und nach unten in den Sammelbehälter 1 wandern.

Wie Fig. 2 und 3 zeigen, ist der Beschleunigungskegel 39 in einem Einsatzkörper 43 ausgebildet. Somit kann bei Bedarf nicht nur der Zyklonabscheider 3 mit dem Zyklongehäuse 5 ausgewechselt werden, sondern es kann auch der Einsatzkörper 43 bei Bedarf gewechselt werden, wenn eine andere Dimensionierung und/oder Formgebung des Kegels 39 zweckmäßig ist. An der Oberseite des Zyklongehäuses 5 ist, ebenfalls auswechselbar, eine Ausströmeinheit 45 angebracht. Diese weist einen als Tauchrohr sich koaxial zur Hochachse 11 in den Einlaufzylinder 37 erstreckenden Ausströmkanal 47 auf, der bei dem Ausführungsbeispiel von Fig. 2 geradlinig entlang der Achse 11 zum oben liegenden Ausströmanschluss 9 verläuft.

Das Ausführungsbeispiel von Fig. 3 unterscheidet sich vom Beispiel von Fig. 2 lediglich durch die unterschiedliche Bauweise der Ausströmeinheit 45. Anders als bei Fig. 2 weist der Ausströmkanal 47 eine Biegung 49 auf, an der der Ausströmkanal 47 in einen horizontalen Abschnitt 52 übergeht, der zum nunmehr seitlich gelegenen Ausströmanschluss 9 führt.

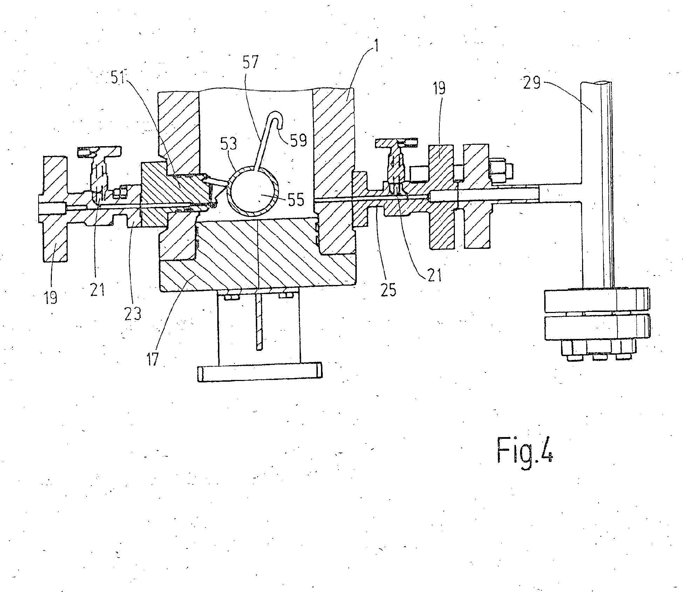

Bei beiden Ausführungsbeispielen von Fig. 2 und 3 ist zusätzlich zu dem manuell steuerbaren Auslassanschluss 33, der lediglich in Fig. 1 sichtbar ist, der in Fig. 2 bis 4 sichtbare weitere Auslassanschluss 23 selbststätig steuerbar. Als Beispiel für eine derartige Steuerung zeigen die Fig. 2 bis 4 in stark schematisch vereinfachter Darstellung einen am Auslassanschluss 23 befindlichen Ventileinsatz 51, der ein Schwimmerventil enthält. Dieses ist durch eine Schwimmerkugel 53 betätigbar, die in dem im Sammelbehälter 1 angesammelten Fluid aufschwimmt. Zur Erzeugung eines sicheren Auftriebes ist die Schwimmerkugel 53 vorzugsweise, wie in Fig. 4 gezeigt, als Hohlkugel ausgebildet. Um bei dem gegebenenfalls beträchtlich hohen Druck, der sich im Sammelbehälter 1 aufbauen kann, ein Zusammendrücken der hohlen Schwimmerkugel 53 zu vermeiden, ist, wie in Fig. 4 gezeigt, für den Innenraum 55 der Kugel 53 eine Druckausgleichseinrichtung vorgesehen, die beim Beispiel von Fig. 4 durch ein Ausgleichsrohr 57 gebildet ist, das am oberen Ende derart abgeknickt ist, dass von oben herabrieselnde Substanzen nicht in die Rohröffnung 59 eintreten.

Durch die Erfindung lässt sich eine Art Baukastensystem verwirklichen, indem, bei gleicher Bauweise eines Sammelbehälters 1 mit zugeordneten Komponenten, verschiedene Zyklongrößen und -ausführungen zum Einsatz gebracht werden, wobei weitere Anpassungen durch unterschiedliche Bauweise der Ausströmeinheit 45 für obenliegenden Ausströmanschluss 9 oder seitlichen Ausströmanschluss 9 vorgenommen werden können und/ oder unterschiedliche Einsatzkörper 43 für gewünschte Formgebungen des Beschleunigungskegels 39 benutzbar sind.

Wie Fig. 1 zeigt, ist am Anschlussflansch 19 des Zuströmanschlusses 7 ein Gaskühler 61 angeschlossen, in dem das zu konditionierende, in den Zyklonabscheider 3 einströmende Gas abkühlbar ist. Durch Abkühlen auf eine unter dem Taupunkt liegende Temperatur, beispielsweise 10 K unter dem Taupunkt, lassen sich dampfförmige Phasen in flüssige Phasen überführen, um dadurch im Zyklonabscheider 3 eine optimale Abscheidung zu erreichen.

## Patentansprüche

1. Baukastensystem mit einer Vorrichtung zur Konditionierung von Gasen, insbesondere von Sperrgas, mit einer Separatoreinheit (3), insbesondere zum Abscheiden von Flüssigkeiten und/oder Partikeln aus dem die Vorrichtung durchströmenden Gas, und mit einem Sammelbehälter (1) für abgeschiedene Substanzen, wobei die Separatoreinheit (3) einen Zyklonabscheider (3) mit einem Zyklongehäuse (5) aufweist, das am unteren Ende eines Einlaufzylinders (37) einen Beschleunigungskegel (39) aufweist, der sich am Übergang zwischen Gehäuse (5) und der Oberseite (13) des Sammelbehälters (1) in dessen Eingangsöffnung (15) und damit in dessen Innenraum erstreckt, wobei der Beschleunigungskegel (39) in einem Einsatzkörper (43) ausgebildet ist, **dadurch gekennzeichnet, dass** mehrere unterschiedliche Einsatzkörper (43) vorgesehen sind, die bei Bedarf gewechselt werden, wenn eine andere Dimensionierung und/oder Formgebung des Beschleunigungskegels (39) zweckmäßig ist.

2. Baukastensystem nach Anspruch 1, **dadurch gekennzeichnet, dass** die Separatoreinheit (3) als eigenständige, vom Gas durchströmbare Baueinheit auswechselbar am Sammelbehälter (1) angeordnet ist.

3. Baukastensystem nach Anspruch 1 oder 2, **dadurch gekennzeichnet, dass** die Separatoreinheit (3) an der Oberseite (13) des Sammelbehälters (1) angebracht und mit diesem über eine Eingangsöffnung (15) in Verbindung ist.

4. Baukastensystem nach einem der vorstehenden Ansprüche, **dadurch gekennzeichnet, dass** an dem Zyklongehäuse (5) eine Zuströmöffnung (41) derart angeordnet ist, dass der Gasstrom im Zyklongehäuse (5) eine Drallströmung um dessen vertikale Hochachse (11) ausbildet, und dass am Zyklongehäuse (5) eine Ausströmeinheit (45) mit einem koaxial zur Hochachse (11) nach oben verlaufenden Ausströmkanal (47) austauschbar angeordnet ist.

5. Baukastensystem nach Anspruch 4, **dadurch gekennzeichnet, dass** der Ausströmkanal (47) geradlinig, vorzugsweise in einer vorgebbaren axialen Richtung, zu einem Ausströmanschluss (9) verläuft.

6. Baukastensystem nach Anspruch 4 oder 5, **dadurch gekennzeichnet, dass** der Ausströmkanal (47) einen sich an seinen vertikalen Abschnitt anschließenden und horizontal zu einem Ausströmanschluss (9) verlaufenden Abschnitt (52) aufweist.

7. Baukastensystem nach einem der vorstehenden Ansprüche, **dadurch gekennzeichnet, dass** sie im Strömungsweg des der Separatoreinheit (3) zuströmenden Gases einen Gaskühler (61) aufweist.

8. Baukastensystem nach einem der vorstehenden Ansprüche, **dadurch gekennzeichnet, dass** am Grund des Sammelbehälters (1) eine steuerbare Auslasseinrichtung (21; 51) für angesammeltes Fluid vorgesehen ist.

9. Baukastensystem nach einem der vorstehenden Ansprüche, **dadurch gekennzeichnet, dass** eine manuell steuerbare Auslasseinrichtung, beispielsweise in Form eines Nadelventiles (21), vorgesehen ist.

10. Baukastensystem nach einem der vorstehenden Ansprüche, **dadurch gekennzeichnet, dass** dem Sammelbehälter (1) eine die Höhe des Füllstandes angesammelten Fluides erkennende Sensoreinrichtung (29) zugeordnet ist.

11. Baukastensystem nach einem der vorstehenden Ansprüche, **dadurch gekennzeichnet, dass** eine in Abhängigkeit von einem Signal der die Füllstandshöhe erkennenden Sensoreinrichtung (29) steuerbare Auslasseinrichtung (23) vorgesehen ist.

12. Baukastensystem nach einem der vorstehenden Ansprüche, **dadurch gekennzeichnet, dass** die Auslasseinrichtung (23) ein durch einen im Sammelbehälter (1) befindlichen Schwimmer (53) steuerbares Auslassventil (51) aufweist.

## Claims

1. Modular system with a device for conditioning gases, particularly seal gas, having a separator unit (3), particularly for separating liquids and/or particles from the gas flowing through the device, and having a collection vessel (1) for separated substances, wherein the separator unit (3) comprises a cyclone separator (3) with a cyclone housing (5) that comprises an acceleration cone (39) at the lower end of an inlet cylinder (37), said acceleration cone extending, at the transition between the housing (5) and the top side (13) of the collection vessel (1), into the inlet opening (15) thereof and thus into the inner chamber thereof, wherein the acceleration cone (39) is formed in an insert body (43), **characterised in that** a plurality of different insert bodies (43) are provided, which are changed as required if another size and/or shape of the acceleration cone (39) is expedient.

2. Modular system according to claim 1, **characterised in that** the separator unit (3) is arranged interchangeably on the collection vessel (1) as an autonomous module through which gas is able to flow.

3. Modular system according to either claim 1 or claim 2, **characterised in that** the separator unit (3) is mounted on the top side (13) of the collection vessel (1) and connected to said vessel via an inlet opening (15).

4. Modular system according to any of the preceding claims, **characterised in that** an inflow opening (41) is arranged on the cyclone housing (5) such that the gas flow in the cyclone housing (5) forms a swirling flow around the vertical upright axis (11) thereof, and **in that** an outflow unit (45) with an outflow channel (47) running upwards, coaxially with the vertical axis (11), is interchangeably arranged on the cyclone housing (5).

5. Modular system according to claim 4, **characterised in that** the outflow channel (47) runs in a straight line, preferably in a pre-definable axial direction, to an outflow port (9).

6. Modular system according to either claim 4 or claim 5, **characterised in that** the outflow channel (47) comprises a section (52) adjoining its vertical section and running horizontally to an outlet port (9).

7. Modular system according to any of the preceding claims, **characterised in that** it comprises a gas cooler (61) in the flow path of the gas flowing to the separator unit (3).

8. Modular system according to any of the preceding claims, **characterised in that** a controllable outlet apparatus (21; 51) is provided for collected fluid at the base of the collection vessel (1).

9. Modular system according to any of the preceding claims, **characterised in that** an outlet apparatus that can be controlled manually, for example in the form of a needle valve (21), is provided.

10. Modular system according to any of the preceding claims, **characterised in that** a sensor apparatus (29) that detects the filling level of the collected fluid is assigned to the collection vessel (1).

11. Modular system according to any of the preceding claims, **characterised in that** an outlet apparatus (23) that can be controlled as a function of a signal from the sensor apparatus (29) that detects the filling level is provided.

12. Modular system according to any of the preceding claims, **characterised in that** the outlet apparatus (23) comprises an outlet valve (51) that can be controlled by a float (53) located in the collection vessel (1).

## Revendications

1. Système modulaire comprenant une installation de conditionnement de gaz, en particulier de gaz d'arrêt, comprenant une unité (3) formant séparateur, en particulier pour séparer des liquides et/ou des particules du gaz passant dans l'installation, et comprenant un récipient (1) collecteur de substances séparées, dans lequel l'unité (3) formant séparateur a un séparateur (3) à cyclone ayant une enveloppe (5) de cyclone, qui a, à l'extrémité inférieure d'un cylindre (37) d'entrée, un cône (39) d'accélération, qui s'étend à la transition entre l'enveloppe (5) et le côté (13) supérieur du récipient (1) collecteur dans son ouverture (15) d'entrée et ainsi dans son espace intérieur, dans lequel le cône (39) d'accélération est constitué en un insert (43), **caractérisé en ce qu'**il est prévu plusieurs inserts (43) différents, qui sont remplacés en cas de besoin, si un autre dimensionnement et/ou une autre conformation du cône (39) d'accélération est opportun.

2. Système modulaire suivant la revendication 1, **caractérisé en ce que** l'unité (3) formant séparateur est montée remplaçable sur le récipient (1) collecteur, en unité de construction indépendante, pouvant être parcourue par le gaz.

3. Système modulaire suivant la revendication 1 ou 2, **caractérisé en ce que** l'unité (3) formant séparateur est monté du côté (13) supérieur du récipient (1) collecteur et communique avec celui-ci par une ouverture (15) d'entrée.

4. Système modulaire suivant l'une des revendications précédentes, **caractérisé en ce qu'**une ouverture (41) d'afflux est disposée sur l'enveloppe (5) du cyclone, de manière à ce que le courant gazeux forme dans l'enveloppe (5) du cyclone un courant tourbillonnaire autour de son axe (11) vertical, et **en ce que**, sur l'enveloppe (5) du cyclone, est montée, de manière à pouvoir être remplacée, une unité (45) de sortie, ayant un conduit (47) de sortie s'étendant vers le haut coaxialement à l'axe (11) vertical.

5. Système modulaire suivant la revendication 4, **caractérisé en ce que** le conduit (47) de sortie s'étend en ligne droite, de préférence dans une direction axiale pouvant être donnée à l'avance, vers un raccord (9) de sortie.

6. Système modulaire suivant la revendication 4 ou 5, **caractérisé en ce que** le conduit (47) de sortie a un tronçon (52) se raccordant à son tronçon vertical et s'étendant horizontalement vers un raccord (9) de sortie.

7. Système modulaire suivant l'une des revendications précédentes, **caractérisé en ce qu'**il a un refroidisseur (61) de gaz dans le trajet d'écoulement du gaz arrivant à l'unité (3) formant séparateur.

8. Système modulaire suivant l'une des revendications précédentes, **caractérisé en ce qu'**un dispositif (21 ; 51) pouvant être commandé de sortie de fluide collecté est prévu au fond du récipient (1) collecteur.

9. Système modulaire suivant l'une des revendications précédentes, **caractérisé en ce qu'**il est prévu un dispositif de sortie pouvant être commandé manuellement, par exemple sous la forme d'une soupape (21) à aiguille.

10. Système modulaire suivant l'une des revendications précédentes, **caractérisé en ce qu'**un dispositif (29) capteur, détectant le niveau de remplissage du fluide collecté, est affecté au récipient (1) collecteur.

11. Système modulaire suivant l'une des revendications précédentes, **caractérisé en ce qu'**il est prévu un dispositif (23) de sortie pouvant être commandé en fonction d'un signal du dispositif (29) capteur détectant le niveau.

12. Système modulaire suivant l'une des revendications précédentes, **caractérisé en ce que** le dispositif (23) de sortie a une soupape (51) de sortie, qui peut être commandée par un flotteur (53) se trouvant dans le récipient (1) collecteur.
